# EUROPÄISCHE PATENTSCHRIFT

(11) **EP 0 920 783 B1**
(45) Veröffentlichungstag und Bekanntmachung des Hinweises auf die Patenterteilung: **17.03.2004**
(21) Anmeldenummer: 98928074.8
(22) Anmeldetag: 26.03.1998
(51) Int. Cl.: H04Q 7/36

(54) **VERFAHREN ZUR FUNKNETZPLANUNG**
METHOD FOR PLANNING A CELLULAR RADIO NETWORK
PROCEDE DE PLANIFICATION DE RESEAUX DE RADIOCOMMUNICATION

(30) Priorität: 26.03.1997 DE 19712743
(43) Veröffentlichungstag der Anmeldung: 09.06.1999
(73) Patentinhaber: T-Mobile Deutschland GmbH, 53227 Bonn (DE)
(72) Erfinder: KÖNIG, Ulrich, 48301 Nottuln (DE)
(74) Vertreter: Riebling, Peter, Dr.-Ing.
(86) Internationale Anmeldenummer: PCT/DE1998/000881
(87) Internationale Veröffentlichungsnummer: WO 1998/043458

(56) Entgegenhaltungen:
- WO-A-94/03986
- BRECHTMANN C ET AL: "PLANNING OF GSM AND PCN MOBILE RADIO NETWORKS" PROCEEDINGS OF IEEE SINGAPORE INTERNATIONAL CONFERENCE ON NETWORKS, Bd. 1, 6. September 1993, Seiten 231-235, XP000601263
- MAC DONALD V H: "ADVANCED MOBILE PHONE SERVICE: THE CELLULAR CONCEPT" BELL SYSTEM TECHNICAL JOURNAL, Bd. 58, Nr. 1, 1. Januar 1979, Seiten 15-41, XP000568041

## Beschreibung

Die Erfindung betrifft ein Verfahren zur Funknetzplanung nach dem Oberbegriff des Patentanspruchs 1.

Verschiedene Verfahren zur Planung von zellularen Funknetzen sind aus dem Stand der Technik, z.B. aus WO 94/03986 oder aus Brechtmann, C.: Planning of GSM and PCN Mobile Radio Networks. In: Proceedings of IEEE Singapore International Conference on Networks, vol. 1, Seiten 231-235 bekannt.

Damit es in einem Kommunikationsnetz nicht zu Störungen durch Laufzeitunterschiede kommt, ist es notwendig, die Senderstandorte in einem bestimmten Abstand voneinander zu errichten. Durch die Festlegung der Abstände entsteht eine Zellenstruktur, wobei jedem Sender ein Versorgungsgebiet (Zelle) zugeteilt ist.

Die Planung und Überprüfung der Zellstruktur findet zur Zeit weitgehend manuell durch eine mit der Planung beauftragte Person statt. Die Planung und visuelle Überprüfung ist sehr zeitaufwendig und ist erst nach Berechnung von Feldstärkeverteilungen möglich.

Aufgabe der Erfindung ist es daher, ein Verfahren vorzuschlagen, das es erlaubt, die Funknetzplanung teilweise automatisiert durchzuführen.

Gelöst wird diese Aufgabe durch das Kennzeichen des Anspruchs 1.

Es wird eine Liste bereits vorhandener Senderstandorte herangezogen, wobei diese Senderstandorte als mögliche Senderstandorte für das geplante Kommunikationsnetz in Betracht kommen.

In der Liste sind zumindest Angaben über die geographische Position und Höhe aller bestehenden Senderstandorte enthalten. Jeder Betreiber eines Kommunikationsnetzes besitzt derartige Senderstandortlisten. Die Senderstandorte sind in einer Senderstandortliste abgelegt.

In einer Abwandlung der Erfindung ist vorgesehen, daß aus der Liste der vorhandenen Senderstandorte nach bestimmten Kriterien eine Vorauswahl nach denjenigen Standorten getroffen wird, die für das geplante Kommunikationsnetz besonders in Betracht kommen.

Im nächsten Schritt wird ein virtuelles, vorher in seinen Abmessungen festgelegtes Zellenraster erzeugt, das mit den ermittelten Senderstandorten verglichen wird. Die Lage des Zellenraster wird gegenüber den Senderstandorten solange verschoben und verdreht, bis eine maximale Anzahl an Senderstandorten ermittelt wird, die sich innerhalb eines definierten Zellmittelpunktes befinden. Der Radius des Zellmittelpunktes und der Zellabstand (Zellengröße) kann über Aufrufparameter vorher festgelegt werden.

Die so ermittelten Senderstandorte werden anschließend in eine weitere Liste eingetragen. Auf Basis der ermittelten Senderstandorte kann mit geeigneten Hilfsmitteln die jeweilige Feldstärkeverteilung bestimmt werden.
Es ist vorgesehen, auch eine Grafikdatei zu erzeugen, die einen visuellen Überblick über die Berechnungen, d.h. optimales Zellenraster und Senderstandorte, gibt.

Neben der effektiven und schnellen Bestimmung möglicher Senderstandorte in der ersten Planungsphase, kann das erfindungsgemäße Verfahren beim weiteren Netzausbau zur Kontrolle der Zellstruktur sowie zur Kleinzellenplanung innerhalb von Großstädten und für die Standorthomogenisierung eines bestehenden Funknetzes, eingesetzt werden.

Daneben können mit dem Verfahren auch Berechnungen für Teilbereiche, wie z.B. Niederlassungsgebiete, durchgeführt werden. Durch seine geographische Unabhängigkeit kann das Verfahren universell und international eingesetzt werden.

Durch den Einsatz des Verfahrens wird zudem eine optimale Nutzung vorhandener Senderstandorte gewährleistet, ohne daß dafür aufwendige Untersuchungen vom jeweiligen Planer durchgeführt werden müssen.

Das erfindungsgemäße Verfahren lässt sich vorteilhaft auf ein Computerprogramm übertragen, so daß zur automatischen Durchführung des Verfahrens lediglich eine Computeranlage mit ausreichender Rechenleistung benötigt wird. Die als Ausgangswerte benötigten, vorhandenen Senderstandorte sind dabei in einer Datei abgespeichert.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.
- Figur 1: zeigt ein Beispiel für eine virtuell erzeugtes Zellenraster;
- Figur 2: zeigt einen Ausschnitt des virtuellen Zellenrasters mit überlagerten vorhandenen Senderstandorten;
- Figur 3: zeigt ein Beispiel einer ausgegebenen Grafik des optimalen Zellenrasters mit den ermittelten Senderstandorten.

Der erste Schritt des erfindungsgemäßen Verfahrens ist die Untersuchung einer alle vorhandenen Senderstandorte enthaltenden Senderstandortdatei auf für das jeweils geplante Kommunikationsnetz brauchbare Senderstandorte. Diese Senderstandorte werden anhand verschiedener Kriterien, wie z.B. bauliche Resourcen, Lage und Höhe des Standortes etc. ermittelt.

Tabelle 1 zeigt ein Beispiel einer solchen Senderstandortdatei:

**Tabelle 1**

| Nr. | Standort | Geograph. Länge | Geograph. Breite | Höhe ü.d.M. in m |
|---|---|---|---|---|
| 1 | Hochberg | 10,3574° | 45,2456° | 530 |
| 2 | Stetten | 10,4434° | 45,3357° | 150 |
| 3 | Fichtenwald | 10,5329° | 45,4547° | 340 |
| | ... | ... | ... | ... |

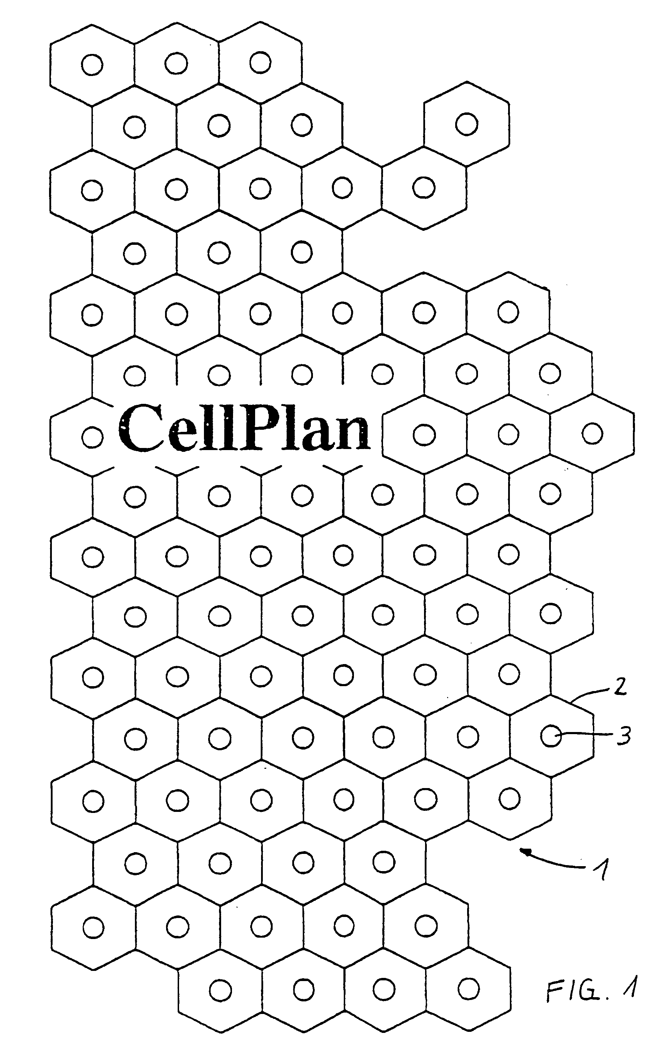

In einem weiteren Schritt, wie z.B. in Figur 1 dargestellt ist, wird ein virtuelles Zellenraster 1 erzeugt. Das Zellenraster besteht aus einer Vielzahl von z.B. hexagonalen Zellen 2, wobei die geographische Position jeder Zelle anhand der Position der Zellenmitte 3 definiert ist. Die Größe der Zellen 2, d.h. der Abstand der Zellmittelpunkte 3 untereinander, und die Größe des Zellmittelpunktes 3 sind vorher über Aufrufparameter einstellbar.

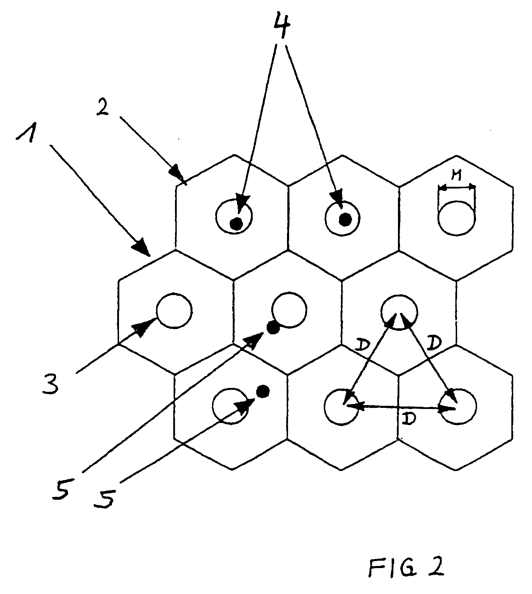

Wie in Figur 2 erläutert, wird die Zellgröße über die gegenseitige Distanz D der Zellmittelpunkte bestimmt und wird vom Anwender vorgegeben. Der Durchmesser M des Zellenmittelpunkts 3 wird als Prozentangabe in Abhängigkeit von der gegenseitigen Distanz D der Zellen 2 definiert. Weiterhin kann über einen Parameter die maximale Lageabweichung des Senderstandortes zum tatsächlichen Zellenmittelpunkt angegeben werden.

Das Zellenraster, d.h. die einzelnen Positionen der Zellen 2, werden nun mit den ermittelten Senderstandorten verglichen.

Durch Verschieben und Drehen des Zellenrasters bezüglich der Senderstandorte wird ein Maximum an Senderstandorten ermittelt, die sich innerhalb der einzelnen Zellenmittelpunkte befinden. Ein geeigneter Senderstandort muß im definierten Zellmittelpunkt 3 liegen, um als möglicher Zellstandort in Frage zu kommen. Im Beispiel liegen die Senderstandorte 4 im Zellenmittelpunkt 3, wogegen die Senderstandorte 5 außerhalb des definierten Zellenmittelpunktes 3 liegen.
Die so ermittelte maximale Anzahl von Senderstandorten 4 wird in einer Datei abgespeichert. Diese Datei enthält nun die Daten der vorhandenen Senderstandorte 4, die für das neu geplante Kommunikationsnetz genutzt werden können.

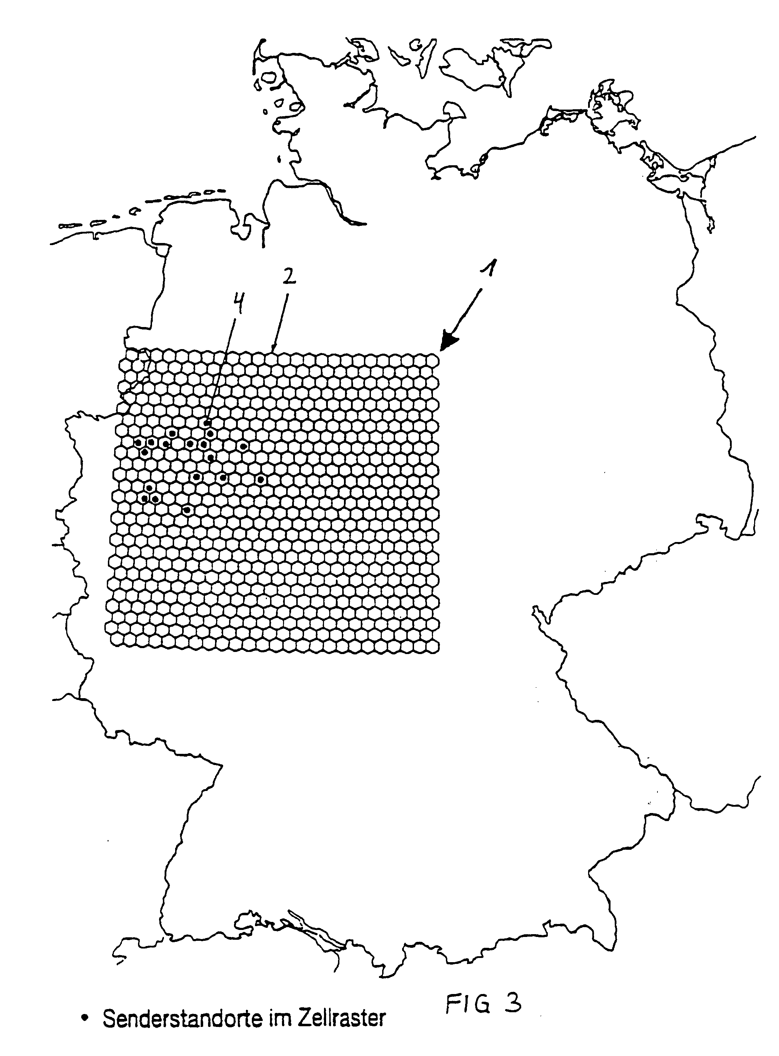

Auf Basis der ermittelten Senderstandorte wird dann in bekannter Weise für jeden Standort die Feldstärkeverteilung untersucht. Die weitere Netzplanung wird auf Basis der ermittelten Zellstandorte fortgesetzt. Gleichzeitig wird das Ergebnis, gemäß Figur 3, graphisch dargestellt, um einen visuellen Überblick über die Berechnungen zu bekommen. Es wird das optimale Zellenraster 1 im untersuchten Gebiet dargestellt und die ermittelten Senderstandorte 4, die sich im definierten Mittelpunktsbereich 3 der Zellen 2 befinden. Als Ergebnis erhält man also Zellenstandorte, in denen sich bereits ein geeigneter Senderstandort befindet.

Ein Beispiel möglicher Zellengrößen und Zellmittelpunktsgrößen soll anhand einer Funkruf-Zellstruktur gegeben werden:
Standardzellstruktur:
   Zellabstand D = Zellendurchmesser = 15 km, definierter Durchmesser M des Zellenmittelpunktes = 30% = 4,5 km.
Kleinzellenstruktur:
   Zellabstand D = Zelldurchmesser = 4 km, definierter Durchmesser M des Zellmittelpunktes = 20% = 0,8 km.

## Patentansprüche

1. Verfahren zur Planung von zellularen Funknetzen, **gekennzeichnet durch** folgende Schritte:
Generieren eines virtuellen Zellenrasters (1) mit einer Vielzahl von Zellen (2) vorgegebener Größe und Form,
Ermitteln einer Teilmenge (4) von Senderstandorten (4, 5) aus einer Liste von bereits bestehenden Senderstandorten, die sich innerhalb eines vorgegebenen Mittelpunktsbereiches der einzelnen Zellen (2) des virtuellen Zellenrasters (1) befinden,
Maximieren der ermittelten Teilmenge (4) von Senderstandorten **durch** wiederholtes Verdrehen und Verschieben der Lage des Zellenrasters (1) gegenüber den bestehenden Senderstandorten (4, 5).
Eintragen der in der ermittelten Teilmenge (4) enthaltenen maximalen Anzahl von Senderstandorten in eine Liste.

2. Verfahren nach Anspruch 1, **dadurch gekennzeichnet, daß** aus der Liste der bestehenden Senderstandorte eine Vorauswahl geeigneter Senderstandorte anhand bestimmter Auswahlkriterien getroffen wird.

3. Verfahren nach Anspruch 1 oder 2, **dadurch gekennzeichnet, daß** die Größe der Zellen des virtuellen Zellenrasters durch Eingabe des gegenseitigen Mittelpunktsabstands (D) bestimmt wird.

4. Verfahren nach einem vorhergehenden Ansprüche, **dadurch gekennzeichnet, daß** die Größe (M) der Mittelpunktsbereiche der Zellen (2) als definiertes Verhältnis des Abstands (D) der Zellenmittelpunkte (3) angegeben wird.

5. Verfahren nach einem vorhergehenden Ansprüche, **dadurch gekennzeichnet, daß** das Zellenraster (1) und die Senderstandorte der ermittelten Teilmenge (4) graphisch dargestellt werden.

## Claims

1. Process for planning cellular radio networks, **characterised by** the following steps:
generating a virtual cell raster (1) having a plurality of cells (2) of given size and form,
determining a subset (4) of transmitter locations (4, 5) from a list of already existing transmitter locations which are situated within a given central area region of the individual cells (2) of the virtual cell raster (1),
maximising the determined subset (4) of transmitter locations by repeated rotation and displacement of the position of the cell raster (1) with respect to the existing transmitter locations (4, 5)
entering the maximum number of transmitter locations present in the determined subset (4) onto a list.

2. Process according to claim 1, **characterised in that** a pre-selection of suitable transmitter locations using certain selection criteria is made from the list of existing transmitter locations.

3. Process according to claim 1 or 2, **characterised in that** the size of the cells of the virtual cell raster is determined by input of the mutual central area distance (D).

4. Process according to one of the preceding claims, **characterised in that** the size (M) of the central area regions of the cells (2) is indicated as the defined ratio of the distance (D) of the cell central areas (3).

5. Process according to one of the preceding claims, **characterised in that** the cell raster (1) and the transmitter locations of the determined subset (4) are shown graphically.

## Revendications

1. Procédé de planification de réseaux cellulaires de radiotéléphonie, **caractérisé par** les étapes suivantes :
- production d'une trame cellulaire virtuelle (1) avec une multiplicité de cellules (2) d'une taille et d'une forme prédéfinies,
- détermination d'un sous-ensemble (4) de positions d'émetteurs (4, 5) à partir d'une liste de positions d'émetteurs déjà existants qui se trouvent à l'intérieur d'une zone centrale prédéfinie des cellules individuelles (2) de la trame cellulaire virtuelle (1),
- maximalisation du sous-ensemble déterminé (4) de positions d'émetteurs grâce à la rotation et à la translation répétées de la position de la trame cellulaire (1) par rapport aux positions d'émetteurs (4, 5) existantes,
- inscription, dans une liste, du nombre maximal de positions d'émetteurs contenu dans le sous-ensemble déterminé (4).

2. Procédé selon la revendication 1, **caractérisé en ce que** dans la liste des positions d'émetteurs existantes, une présélection des positions d'émetteurs appropriées est faite à l'aide de critères de sélection définis.

3. Procédé selon la revendication 1 ou 2, **caractérisé en ce que** la taille des cellules de la trame cellulaire virtuelle est définie grâce à l'entrée de l'écartement (D) des centres.

4. Procédé selon l'une des revendications précédentes, **caractérisé en ce que** la taille (M) des zones centrales des cellules (2) est indiquée sous la forme d'une proportion définie de l'écartement (D) des centres (3) des cellules.

5. Procédé selon l'une des revendications précédentes, **caractérisé en ce que** la trame cellulaire (1) et les positions d'émetteurs du sous-ensemble déterminé (4) sont représentées graphiquement.
